# EUROPÄISCHE PATENTSCHRIFT

(11) **EP 1 606 703 B1**
(45) Veröffentlichungstag und Bekanntmachung des Hinweises auf die Patenterteilung: **03.09.2014**
(21) Anmeldenummer: 04722842.4
(22) Anmeldetag: 24.03.2004
(51) Int. Cl.: G06F 3/033, G06F 3/0482, H04M 1/725

(54) **ANPASSUNGSVERFAHREN FÜR DIE MENÜFÜHRUNG VON MOBILFUNKENDGERÄTEN**
ADAPTATION DEVICE FOR A MENU-DRIVEN OPERATION OF A MOBILE TELEPHONE TERMINAL
PROCEDE D'ADAPTATION POUR LE DEROULEMENT DU MENU DE TERMINAUX DE TELEPHONIE MOBILE

(30) Priorität: 24.03.2003 DE 10313115
(43) Veröffentlichungstag der Anmeldung: 21.12.2005
(73) Patentinhaber: Vodafone Holding GmbH, 40213 Düsseldorf (DE)
(72) Erfinder: GAIDA, Klemens, 40213 Düsseldorf (DE); MATZEIK, Silke, 64683 Einhausen (DE)
(74) Vertreter: CBDL Patentanwälte
(86) Internationale Anmeldenummer: PCT/EP2004/003118
(87) Internationale Veröffentlichungsnummer: WO 2004/086211

(56) Entgegenhaltungen:
- EP-A- 0 840 504
- EP-A- 0 891 066
- US-A- 5 546 523
- US-A1- 2001 006 388
- US-A1- 2003 050 916
- US-B1- 6 271 846

## Beschreibung

### Technisches Gebiet

Die Erfindung betrifft ein Verfahren zum Individualisieren der Menüführung eines Mobilfunkendgeräts mit einer hierarchischen, menügesteuerten Anzeige.

### Stand der Technik

Mobilfunkendgeräte werden in der Regel über ein Menü, welches auf eine Anzeige dargestellt wird, gesteuert. Die einzelnen Menüpunkte des Menüs werden mit Hilfe der Tastatur des Mobilfunkendgeräts ausgewählt. Benutzer von Mobilfunkendgeräten wählen erfahrungsgemäß die einzelnen Menüpunkte jeweils nach individuellem Bedarf unterschiedlich häufig auf. Bei hierarchisch aufgebauten Menüs muss sich ein Benutzer, wenn sein gewünschter Menüpunkt ganz unten in der Hierarchie angeordnet ist, erst durch zahlreiche Menüebenen hindurch bewegten,

Die Anzahl der Hierarchieebenen, durch die sich ein Anwender hindurch bewegen muss bestimmen die Häufigkeit der Menüpunkte-Auswahl und den Aufwand des Nutzers zu einem gewünschten Menüpunkt zu gelangen. Dies wird auch als " Klick-Distanz " bezeichnet. Je größer diese Klick-Distanz ist, desto bedienerunfreundlich ist ein solches Menü. Ein Anwender möchte möglichst schnell seine gewünschten Menüpunkte erreichen. Ein bedienerfreundliches Menü weist eine möglichst kurze Klick-Distanz auf.

WO 03/014 978 A2 offenbart ein Verfahren zur Optimierung den Navigation von Hierarchien von Alternativen.

Die Optimierung basiert auf Währscheinlichen keiten, die durch mathematische Funktionen auf verschiedenen Variablen, Statistiken und Parametern abgeschätzt wird.

Die EP 0891 066 A2 offenbart ein Mobilfunkgerät mit einer Anzeige. Das Mobilfunkgerät wird mit einem hierarchisch angeordneten Menü gesteuert. Dabei wird dem herkömmlichen Menü ein Menü mit den am meisten verwendeten Funktionen angehängt. Die Menüs werden in dem Mobilfunkgerät verwaltet, so dass der Mobilfunkanbieter keinen Einfluss auf die Art der Verwaltung der Menüs hat.

### Offenbarung der Erfindung

Aufgabe der Erfindung ist es daher, ein Verfahren zu schaffen, welches die Nachteile des Standes der Technik vermeidet. Ferner ist es Aufgabe der Erfindung, eine möglichst anwenderfreundliche Menüführung zu schaffen.

Erfindungsgemäß wird die Aufgabe durch ein Verfahren zum Individualisieren der Menüführung eines Mobilfunkendgeräts nach Anspruch 1 gelöst.

Die Erfindung beruht auf dem Prinzip, die Menüpunkte derart zu sortieren, dass diejenigen in der Hierarchie ganz oben stehen, die am häufigsten benutzt werden. Je weniger ein Menüpunkt von einem Benutzer ausgewählt wird, desto weiter unten wird er in der Menühierarchie angesiedelt sein.

Als vorteilhafte Ausgestaltung der Erfindung hat sich verwiesen, wenn die Menüführung des erfindungsgemäßen Verfahrens zentral in einer computergesteuerten Verwaltirngseinheit eines Mobilfunknetzes sortiert wird. Da die Menüs mittlerweile ohnehin teilweise zentral in einer computergesteuerten Verwaltungseinheit verwaltet werden, lassen sie sich nun auch dort individuell in geeigneter Weise sortieren.

In einer geeigneten Ausführung der Erfindung wird die Menüführung durch die computergesteuerte Verwaltungseinheit des Mobilfunknetzes als Mobilfunk-Portal mit wenigstens zwei Hierarchie-Ebenen vorgegeben. Jedes Mobilfunkendgerät gelangt so zunächst in ein Mobilfunk-Portal, dessen Aussehen beispielsweise einheitlich für alle Nutzer oder bestimmte Nutzersegmente geregelt ist.

In einer bevorzugten Ausbildung des erfindungsgemäßen Verfahrens werden die Menüpunkte in der Menühierarchie mit steigender Auswahlhäufigkeit entsprechend weiter oben angeordnet werden. Durch diese Maßnahme wird gewährleistet, dass die am häufigsten angewählten Menüpunkte mit den wenigsten "Klicks" erreichbar ist. Dies steigert die Benutzerfreundlichkeit, wenn diese Menüpunkte somit schnellstmöglich erreichbar sind.

Ein Menü wird erfindungsgemäß automatisch und individuell nach Auswahlhäufigkeit eingestellt. Trotzdem kann es gelegentlich aber für den Benutzer wünschenswert sein, dass ein Menüpunkt nicht mehr oder in einer anderen Hierarchieebene erscheint. In einer vorteilhaften Ausgestaltung der Erfindung lassen sich daher einzelne Menüpunkte manuell in der Menühierarchie verschieben.

In einer weiteren Ausgestaltung lassen sich mehrere individuelle Menüprofile erzeugen. Je nach Bedarf kann der Anwender das geeignete Profil aufrufen, welches er gerade benötigt. Auf diese Weise kann beispielsweise ein Menüprofil für die Arbeit und eines für private Zwecke erzeugt werden.

Vorteilhafterweise lassen sich auch diese Menüprofile wiederum in der Menühierarchie automatisch beispielsweise entsprechend der aktuellen Tageszeit, dem Datum (Wochentag/ Wochenende) und dem Aufenthaltsort sortieren. Darüber hinaus kann der Anwender ein gewünschtes Menüprofil manuell auswählen.

Für die Individualisierung der Menüs kann es sich als vorteilhaft für den Anwender erweisen, wenn unabhängig von der Auswahlhäufigkeit sich einzelne Menüpunkte in höhere Ebenen der Menühierarchie verschieben lassen. So kann beispielsweise der Mobilfunkbetreiber den Anwender bei der Individualisierung unterstützen. Dies kann insbesondere in geeigneter Weise durch die zentral von der computergesteuerten Verwaltungseinheit durchgeführt werden.

Weitere Vorteile ergeben sich aus dem Gegenstand der Unteransprüche.

### Kurze Beschreibung der Zeichnung

- Fig. 1: zeigt in einer Prinzipskizze ein hierarchisch angeordnetes Menü.
- Fig. 2: zeigt in einer Prinzipskizze ein individualisiertes Menü.

### Bevorzugtes Ausführungsbeispiel

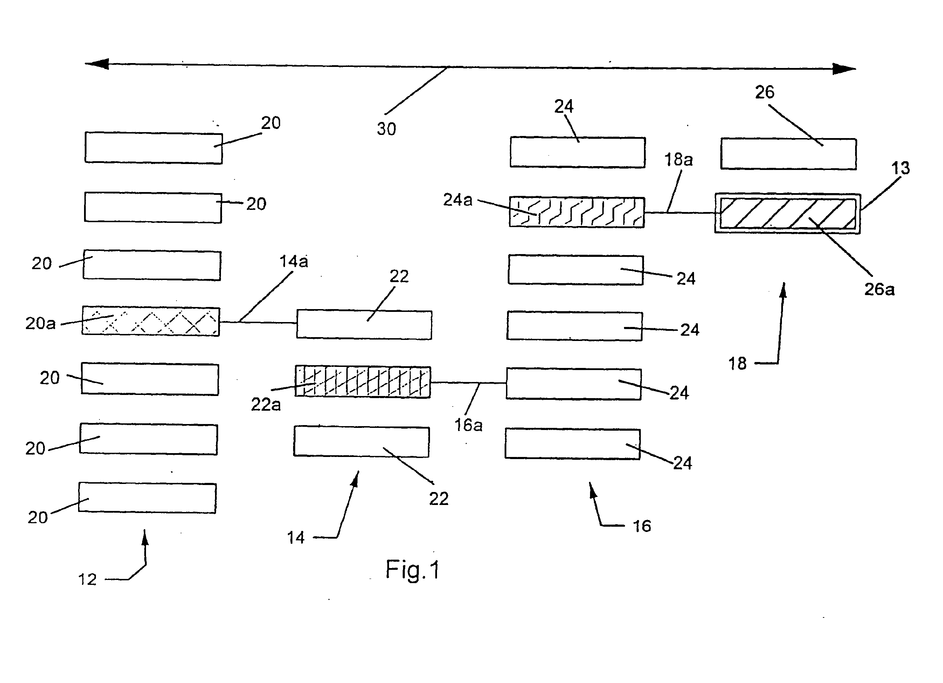

In Fig. 1 wird mit 10 ein hierarchisches Menü für ein erfindungsgemäßes Verfahren dargestellt. Dieses Menü 10 besteht im vorliegenden Ausführungsbeispiel aus vier hierarchisch angeordneten Menüebenen 12, 14, 16, 18. In den einzelnen Menüebenen 12, 14, 16, 18 sind wiederum Menüpunkte 20, 22, 24, 26 vorgesehen.

Die einzelnen Menüpunkte einer Menüebene 12, 14, 16, 18 sind leicht durch Bewegen, beispielsweise mit einem geeigneten Cursor 13, zu erreichen. Ausgewählte Menüpunkte 20a, 22a, 24a, 26a der Menüebenen 12, 14, 16, 18 sind schraffiert dargestellt. Durch Anklicken eines gewünschten Menüpunktes 20a, 22a, 24a, 26a kann ein Anwender in die nächst tiefere Menüebene 14, 16 bzw. 18 gelangen.

Die Bewegung des Cursors 13 zu den Menüebenen 14, 16, 18 wird mit Linien 14a, 16a, 18a angedeutet. Das Bewegen des Cursors 13 und das Anklicken der Menüpunkte 20, 22, 24, 26 erfolgen beispielsweise über eine Tastatur eines Mobilfunkendgerätes. In der nächst tieferen Hierarchieebene des Menüs 10 können erneut Menüpunkte 20, 22. 24, 26 durch Anklicken ausgewählt werden, sodass eine noch tiefere Menüebene 14, 16 bzw. 18 erreicht werden kann. Dieses Verfahren kann so lange fortgesetzt werden, bis die gewünschte Funktion oder Information, beispielsweise bei Menüpunkt 26a, erscheint. Abstand 30 vom ersten ausgewählten Menüpunkt 20a bis hin zum letzten angewählten Menüpunkt 26a wird als Klick-Distanz bezeichnet. Die Klick-Distanz wird im vorliegenden Ausführungsbeispiel mit einem Pfeil symbolisiert.

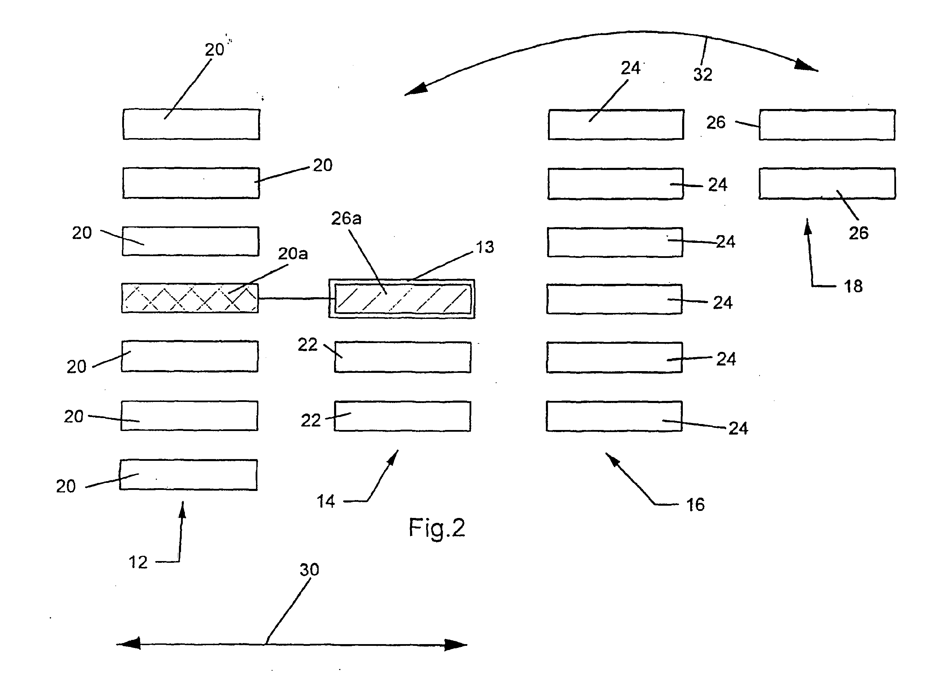

Anhand von Fig. 2 wird nun der erfindungsgemäße Verfahrensablauf erläutert. In Fig. 2 wird ein gegenüber Fig. 1 individualisiertes Menü 10 dargestellt. Das Menü 10 wird nach folgendem Verfahren umgestellt:

Wird ein Menüpunkt 26a häufiger ausgewählt, so wird er automatisch in der Hierarchiestruktur des Menüs 10 weiter nach oben geschoben. Der Vorgang des Verschiebens der Menüpunkte wird mit Pfeil 32 angedeutet. Die Menüpunkte 20, 22, 24, 26, der Menüebenen 12, 14, 16, 18 die am häufigsten ausgewählt worden sind, befinden sich in der Menüstruktur ganz oben bzw. vorne. Dadurch muss sich ein Anwender nicht mehr durch sämtliche Menüebenen 12, 14, 16, 18 hindurch klicken, um seinen gewünschten Menüpunkt, beispielsweise 26a, zu erreichen, wie es in Fig. 1 dargestellt ist. Er kann nun auf kürzestem Wege seinen gewünschten Menüpunkt 26a erreichen. Der Abstand 30 der Klick-Distanz wird soweit wie möglich verkürzt.

Die Verwaltung der Menüstruktur erfolgt in einer zentralen computergesteuerten Verwaltungseinheit des Mobilfunknetzes. Der Betreiber des Mobilfunknetzes bietet die Menüstruktur als Mobilfunk-Portal an. Das Mobilfunk-Portal wird von der computergesteuerten Verwaltungseinheit über das Mobilfunknetz zum Mobilfunkendgerät übermittelt.

Je öfter ein Menüpunkt 26a ausgewählt wird, desto höher wird er in der Hierarchie der Menüstruktur angesiedelt. Dadurch können die am häufigsten genutzten Menüpunkte 26a am schnellsten erreicht werden. Einige Menüpunkte können für den Anwender aber auch nur kurzzeitig interessant sein. Wenn beispielsweise in der Urlaubszeit Informationen zum Urlaubsort oft ausgewählt werden, werden die dazugehörigen Menüpunkte jedoch nach dem Urlaub in der Regel nicht mehr benötigt. Zunächst gelangen die entsprechenden Menüpunkte in der Menühierarchie nach oben, wo sie nach dem Urlaub jedoch nicht mehr von Nutzen sind. Sie lassen sich daher in der Menüstruktur in eine andere, tiefere Menüebene - z.B. 16 oder 18 - manuell verschieben.

Gegebenenfalls kann der entsprechende Menüpunkt durch ein geeignetes Ereignis durch die Verwaltungseinheit automatisch an seinen Ursprungsplatz verschoben werden. Ein solches Ereignis ist beispielsweise der Ablauf eines vorgegebenen Zeitintervalls. Ist das Zeitintervall ohne erneute Benutzung des entsprechenden Menüpunktes abgelaufen, so wird dieser Menüpunkt wieder an seinen ursprünglichen Platz oder eine sonstige Stelle des Menüs 10 verschoben.

Für ein Mobilfunkendgerät können mehrere Menüprofile angelegt werden. Das hat den Vorteil, dass z.B. die eine Menüführung für die Arbeit und die andere für zu Hause vorgesehen sein kann. Auch können mehrere Personen, die ein Mobilfunkendgerät verwenden, unterschiedliche und jeweils individuelle Menüführungen benutzen.

## Patentansprüche

1. Verfahren zum Individualisieren der Menüführung eines Mobilfunkendgeräts mit einer hierarchischen, menügesteuerten Anzeige, wobei Menüpunkte (20, 20a, 22, 22a, 24, 24a, 26, 26a) nach Auswahlhäufigkeit in der Menühierarchie sortiert werden, wobei die Menüführung zentral in einer computergesteuerten Verwaltungseinheit eines Mobilfunknetzes sortiert wird und mehrere individuelle Menüprofile für die Menüführung angelest werden, die automatisch nach dem Aufenthaltsort sortiert werden, **dadurch gekennzeichnet, dass** der Anwender unter den individuellen Menüprofilen für die Menüführung eines manuell auswählen kann.

2. Verfahren zum Individualisieren der Menüführung eines Mobilfunkendgeräts nach Anspruch 1, **dadurch gekennzeichnet, dass** die Menüführung durch die computergesteuerte Verwaltungseinheit des Mobilfunknetzes als Mobilfunk-Portal mit wenigstens zwei Hierarchie-Ebenen (12, 14, 16, 18) vorgegeben wird.

3. Verfahren zum Individualisieren der Menüführung eines Mobilfunkendgeräts nach einem der Ansprüche 1 bis 2, **dadurch gekennzeichnet, dass** die Menüpunkte (20, 20a, 22, 22a, 24, 24a, 26, 26a) in der Menühierarchie (10) mit steigender Auswahlhäufigkeit entsprechend weiter oben angeordnet werden.

4. Verfahren zum Individualisieren der Menüführung eines Mobilfunkendgeräts nach einem der Ansprüche 1 bis 3, **dadurch gekennzeichnet, dass** sich einzelne Menüpunkte (20, 20a, 22, 22a, 24, 24a, 26, 26a) manuell in der Menühierarchie (10) verschieben lassen.

5. Verfahren zum Individualisieren der Menüführung eines Mobilfunkendgeräts nach einem der Ansprüche 1 bis 4, **dadurch gekennzeichnet, dass** einzelne Menüpunkte (20, 20a, 22, 22a, 24, 24a, 26, 26a) sich unabhängig von der Auswahlhäufigkeit in höhere Ebenen (12, 14, 16, 18) der Menühierarchie (10) verschieben lassen.

6. Verfahren zum Individualisieren der Menüführung eines Mobilfunkendgeräts nach Anspruch 5, **dadurch gekennzeichnet, dass** die einzelnen von der Auswahl unabhängigen Menüpunkte (20, 20a, 22, 22a, 24, 24a, 26, 26a) zentral von der computergesteuerten Verwaltungseinheit in höhere Ebenen (12, 14, 16, 18) verschoben werden.

## Claims

1. Method for individualizing the menu navigation of a mobile communications terminal with a hierarchical, menu-driven display, wherein menu items (20, 20a, 22, 22a, 24, 24a, 26, 26a) are sorted in the menu hierarchy by frequency of selection, wherein the menu navigation is sorted centrally in a computer-controlled administrative unit of a mobile communications network and several individual menu profiles are created for the menu navigation, which are automatically sorted according to the whereabouts, **characterized in that** among the individual menu profiles for the menu navigation, the user may select one.

2. Method for individualizing the menu navigation of a mobile communications terminal according to claim 1, **characterized in that** the menu navigation is specified by the computer-controlled administrative unit of the mobile communications network as a mobile communications portal with at least two levels of hierarchy (12, 14, 16, 18).

3. Method for individualizing the menu navigation of a mobile communications terminal according to claim 1 or 2, **characterized in that** said menu items (20, 20a, 22, 22a, 24, 24a, 26, 26a) are placed higher up in said menu hierarchy (10) upon an increasing frequency of selection.

4. Method for individualizing the menu navigation of a mobile communications terminal according to any of claims 1 to 3, **characterized in that** individual menu items (20, 20a, 22, 22a, 24, 24a, 26, 26a) may be moved manually in said menu hierarchy (10).

5. Method for individualizing the menu navigation of a mobile communications terminal according to any of claims 1 to 4, **characterized in that** individual menu items (20, 20a, 22, 22a, 24, 24a, 26, 26a) may be moved to higher levels (12, 14, 16, 18) in said menu hierarchy (10) independently from their frequency of selection.

6. Method for individualizing the menu navigation of a mobile communications terminal according to claim 5, **characterized in that** said individual menu items (20, 20a, 22, 22a, 24, 24a, 26, 26a), which are independent from the selection, are moved centrally to higher levels (12, 14, 16, 18) by the computer-controlled administrative unit.

## Revendications

1. Procédé d'individualisation du guidage par menu d'un terminal de téléphonie mobile avec un affichage hiérarchique commandé par menu, des points de menu (20, 20a, 22, 22a, 24, 24a, 26, 26a) étant triés selon la fréquence de sélection dans la hiérarchie de menu, le guidage par menu étant trié de manière centrale dans une unité de gestion commandée par ordinateur d'un réseau de téléphonie mobile, et plusieurs profils individuels de menu pour le guidage par menu étant créés qui sont triés automatiquement selon le lieu de séjour, **caractérisé par le fait que** l'utilisateur peut choisir manuellement un parmi lesdits profils individuels de menu pour le guidage par menu.

2. Procédé d'individualisation du guidage par menu d'un terminal de téléphonie mobile, selon la revendication 1, **caractérisé par le fait que** le guidage par menu est donné par ladite unité de gestion commandée par ordinateur du réseau de téléphonie mobile, en tant que portail de téléphonie mobile ayant au moins deux niveaux hiérarchiques (12, 14, 16, 18).

3. Procédé d'individualisation du guidage par menu d'un terminal de téléphonie mobile, selon l'une quelconque des revendications 1 à 2, **caractérisé par** le fait les points de menu (20, 20a, 22, 22a, 24, 24a, 26, 26a) sont disposés à un niveau supérieur dans la hiérarchie de menu (10) au fur et à mesure que la fréquence de sélection augmente.

4. Procédé d'individualisation du guidage par menu d'un terminal de téléphonie mobile, selon l'une quelconque des revendications 1 à 3, **caractérisé par le fait que** des points de menu (20, 20a, 22, 22a, 24, 24a, 26, 26a) particuliers peuvent être déplacés manuellement dans la hiérarchie de menu (10).

5. Procédé d'individualisation du guidage par menu d'un terminal de téléphonie mobile, selon l'une quelconque des revendications 1 à 4, **caractérisé par le fait que** des points de menu (20, 20a, 22, 22a, 24, 24a, 26, 26a) particuliers peuvent être déplacés, indépendamment de la fréquence de sélection, à des niveaux (12, 14, 16, 18) supérieurs de la hiérarchie de menu (10).

6. Procédé d'individualisation du guidage par menu d'un terminal de téléphonie mobile, selon la revendication 5, **caractérisé par le fait que** les points de menu (20, 20a, 22, 22a, 24, 24a, 26, 26a) particuliers indépendants de la sélection sont déplacés de manière centrale, par ladite unité de gestion commandée par ordinateur, à des niveaux (12, 14, 16, 18) supérieurs.
